# DEMANDE DE BREVET EUROPEEN

(11) **EP 1 048 710 A1**
(43) Date de publication de la demande: **02.11.2000**
(21) Numéro de dépôt: 00400845.4
(22) Date de dépôt: 28.03.2000
(51) Int. Cl.: C10J 3/66

(54) **Procédé pour la production d'hydrogène à partir d'un gaz issu d'une unité de traitement de déchets**

(30) Priorité: 30.04.1999 FR 9905514
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Petrie, Wilfrid, 75116 Paris (FR); Monereau, Christian, 75011 Paris (FR); Gauthier, Pierre, 94260 Fresnes (FR)
(74) Mandataire: Le Moenner, Gabriel

(57) **Abrégé**

Dans le procédé de l'invention, de l'hydrogène (32) est produit. Le gaz de synthèse (15) produit dans une unité de traitement de déchets (1) est comprimé et refroidi (20) pour produire un gaz (22) qui est ensuite traité directement dans une unité de séparation d'hydrogène (30). Le gaz (15) peut être maintenu à un débit déterminé par injection de matière de régulation (11), autre que des déchets, dans l'unité de traitement (1).

## Description

La présente invention concerne la production d'hydrogène à partir d'un gaz d'alimentation issu d'un procédé de traitement de déchets.

Elle concerne plus particulièrement la production d'hydrogène à partir d'un gaz d'alimentation contenant essentiellement de l'hydrogène, du monoxyde de carbone et du dioxyde de carbone.

Le gaz d'alimentation peut provenir d'un procédé de traitement de déchets tel que décrit en particulier dans le brevet US-A-5 282 431 (Thermoselect Aktiengesellschaft).

Ce procédé consiste à traiter en continu des déchets de toute origine, c'est-à-dire des déchets domestiques et/ou industriels non triés contenant des matières polluantes liquides et/ou solides de toute nature fragmentées en pièces relativement larges ou non.

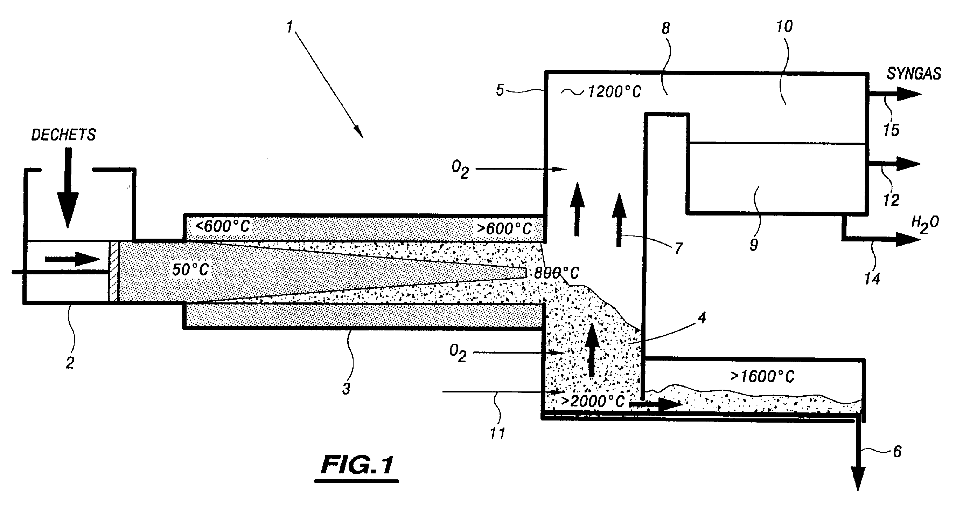

On rappelle brièvement ci-après les étapes essentielles de ce procédé en référence à la figure 1 où est schématisée une unité de traitement de déchets 1.

La masse de déchets est tout d'abord compactée sous pression en 2 pour évacuer au maximum l'air qu'elle renferme.

Cette masse compactée est alors introduite dans un tunnel 3 chauffé à une température supérieure à 100 °C, qui est en général comprise entre 400°C et 800°C, tout en maintenant la pression initiale. On opère ainsi un dégazage des déchets, les matières liquides étant vaporisées alors que les matières solides sont pressées contre la paroi intérieure du tunnel. Il en résulte une agglomération de ces matières solides.

L'agglomérat 4 est ensuite soumis à une combustion en présence d'oxygène dans un réacteur 5 à haute température, supérieure à 1000°C.

Les matières les plus lourdes 6 (telles que substances minérales et métaux) sont fondues dans la partie inférieure du réacteur puis évacuées en cuve.

Un gaz de synthèse brut 7 à haute température est recueilli en tête du réacteur 5 et contient principalement de l'eau, de l'hydrogène, du monoxyde de carbone et du dioxyde de carbone.

Il est ensuite brutalement refroidi en 8 puis soumis à des opérations successives de lavages à l'eau 9 et d'épurations 10 afin d'éliminer la majorité des impuretés 12 en particulier les produits soufrés, les métaux, les sels. L'eau usagée est évacuée en 14.

On obtient ainsi un gaz de synthèse 15 (appelé aussi "syngas") à une pression un peu supérieure à la pression atmosphérique (10 à 20 mbar au dessus) et à une température voisine de 10°C. Ce gaz est saturé en eau dans les conditions opératoires du dernier lavage et contient essentiellement de l'hydrogène, du monoxyde de carbone et du dioxyde de carbone comme indiqué précédemment.

Le gaz de synthèse 15 est habituellement utilisé en premier lieu pour assurer les besoins calorifiques de l'unité de traitement des déchets en particulier comme gaz de chauffage du tunnel de dégazage, pour la fusion des matières solides dans le réacteur où il est alors injecté en partie basse et pour les opérations d'évaporation ainsi que pour compenser les pertes thermiques de l'unité. Il se trouve ainsi autoconsommé en partie, le surplus servant à produire de l'énergie électrique par exemple pour alimenter les moteurs, turbines, etc. de l'installation.

On a proposé dans la demande EP 839 890 (Thermoselect Aktiengesellschaft) de convertir avec de la vapeur d'eau le gaz de synthèse provenant d'une telle unité de traitement de déchets, afin de remplacer au moins en partie, le monoxyde de carbone présent en dioxyde de carbone.

Le gaz de synthèse issu de l'unité de traitement des déchets 1, comprimé et traité dans une unité de conversion à la vapeur ("shift reaction") peut ensuite faire l'objet d'un traitement aval dans différentes unités permettant de produire, selon les cas, de l'hydrogène, du dioxyde de carbone ou encore des produits de synthèse tels que du méthanol ou de l'ammoniac par adjonction d'azote.

La voie retenue dans la demande EP 839 890 est celle qu'enseigne l'art antérieur dans le domaine du traitement du syngas.

En effet, lorsqu'on cherche à produire de l'hydrogène, on a un double avantage à traiter le syngas riche en monoxyde de carbone dans une unité de conversion à la vapeur ("shift reaction").

On augmente la quantité d'hydrogène et on remplace, au moins en partie, le monoxyde de carbone par du dioxyde de carbone plus facile à séparer de l'hydrogène.

Généralement, la purification de l'hydrogène s'effectue dans une unité P.S.A. (Pressure Swing Adsorption ou adsorption à pression modulée) qui permet d'obtenir pour ce gaz une pureté supérieure à 99,9 %. Dans ce cas, la conversion préalable du syngas permet d'obtenir des unités P.S.A. plus efficaces.

On notera que lorsqu'on veut à l'inverse produire préférentiellement du monoxyde de carbone, on n'utilise pas d'unité de conversion. L'état de l'art propose dans ce cas, de retirer le dioxyde de carbone, en particulier par un lavage aux amines et de séparer le monoxyde de carbone des autres constituants par distillation cryogénique.

Le traitement du syngas issu de l'unité de traitement des déchets connu dans la technique est ainsi intéressant dès lors que l'on cherche à maximaliser la production d'hydrogène mais présente néanmoins l'inconvénient de nécessiter au moins deux unités successives pour lè traitement du gaz de synthèse 15, à savoir une première unité pour la conversion du monoxyde de carbone ("shift reaction") et une seconde unité pour la production de l'hydrogène ou autre gaz désiré.

Ceci n'est pas adapté à la production économique d'un tel gaz en petite quantité.

L'objectif de l'invention est ainsi de fournir un procédé permettant de valoriser économiquement le gaz de synthèse provenant d'une unité de traitement de déchets.

L'objectif de l'invention est encore de fournir un tel procédé pour la production d'hydrogène directement à partir du gaz de synthèse, en supprimant en particulier l'unité de conversion lourde et coûteuse du procédé connu.

L'objectif de l'invention est également de fournir un tel procédé adapté à la production d'hydrogène en petite quantité.

Pour satisfaire à ces objectifs, l'invention a pour objet un procédé pour la production d'hydrogène à partir d'un gaz d'alimentation contenant essentiellement de l'hydrogène, du monoxyde de carbone et du dioxyde de carbone, issu d'une unité de traitement de déchets domestiques et/ou industriels non triés contenant des matières polluantes liquides et/ou solides, du type comprenant le compactage des déchets et le dégazage des déchets compactés dans un tunnel chauffé à au moins 100°C, puis la gazéification-fusion des déchets agglomérés résultants, en présence d'oxygène, dans un réacteur à haute température, supérieure à 1 000°C, le refroidissement brutal du gaz de synthèse brut recueilli puis l'élimination d'impuretés par lavages à l'eau et épurations successives pour fournir ledit gaz d'alimentation, caractérisé en ce que le gaz d'alimentation est comprimé et refroidi puis le gaz résultant est directement traité dans une unité de séparation d'hydrogène à basse ou moyenne pression.

Par "directement", on entend le traitement dans une unité de séparation d'hydrogène, du gaz issu de l'unité de traitement des déchets, sans conversion préalable du monoxyde de carbone qu'il contient.

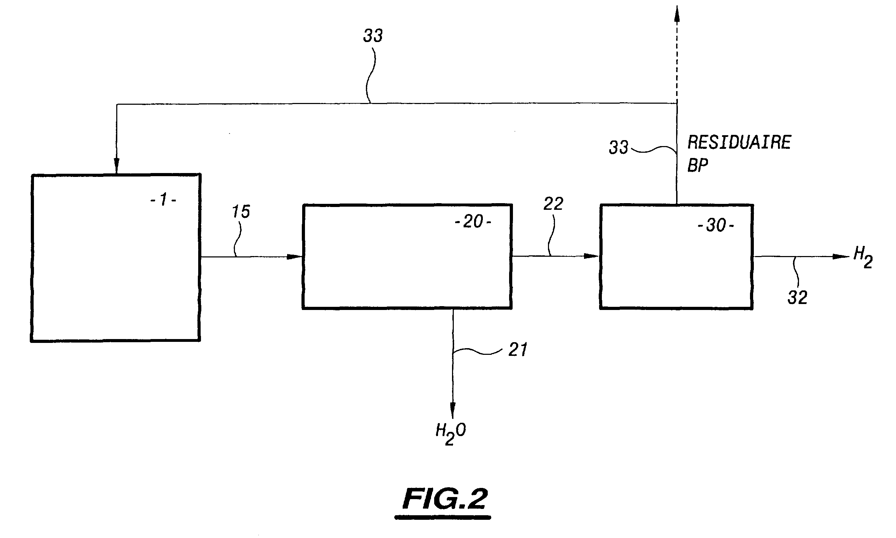

Le procédé selon l'invention qui est mis en oeuvre en aval de l'unité de traitement de déchets, va être décrit plus en détail en référence à la figure 2.

Le gaz de synthèse 15 issu d'une unité de traitement de déchets 1 qui sert de gaz d'alimentation dans le procédé de l'invention, contient essentiellement de l'hydrogène, du monoxyde de carbone et du dioxyde de carbone ainsi que de l'eau.

La composition de ce gaz est variable en particulier en fonction de la qualité et de la quantité des déchets traités.

Sur une base sèche, le gaz d'alimentation comprend généralement une teneur en hydrogène comprise entre 34 et 41 % en volume, une teneur en monoxyde de carbone comprise entre 35 et 41 % en volume, une teneur en dioxyde de carbone comprise entre 23 et 41 % en volume ainsi qu'éventuellement de l'azote à raison de 2 à 6 % en volume.

Le gaz d'alimentation 15 comprend par exemple 35 % en volume d'hydrogène, 35 % en volume de monoxyde de carbone, 27 % en volume de dioxyde de carbone et 3 % en volume d'azote.

Le gaz 15 est comprimé et refroidi en 20 afin d'éliminer l'eau en 21 et quelques autres contaminants présents.

La fraction gazeuse résultante 22 est ensuite traitée dans une unité de séparation d'hydrogène 30.

Cette unité de séparation 30 peut consister en une unité de séparation par perméation ou encore en une unité PSA.

L'unité de perméation permet la production d'hydrogène avec une pureté de l'ordre de 90 à 95 %. L'unité PSA implique quant-à-elle un coût plus élevé mais permet la production d'hydrogène avec une pureté supérieure (99,9 %).

Les procédés P.S.A. utilisés sont ceux décrits dans la littérature, par exemple dans "PRESSURE SWING ADSORPTION " de D.M. RUTHVEN et all, chapitre 6.5

Un rendement en extraction d'hydrogène de 60-80% étant généralement suffisant pour assurer la production d'hydrogène requise à partir du volume disponible de syngas, ces P.S.A. comportent préférentiellement un nombre limité d'adsorbeurs, généralement de 3 à 6, et la durée des différentes étapes peut être réduite par rapport aux durées communément utilisées afin de favoriser l'investissement par rapport à la performance.

Aussi la durée de l'étape de production est généralement inférieure à 180 secondes, préférentiellement inférieure à 120 secondes et encore plus préférentiellement inférieure à 90 secondes.

La pression du gaz est déterminée sur la base d'un compromis entre la pression la plus basse possible pour l'étape de compression et une efficacité satisfaisante de l'unité de séparation d'hydrogène suivante.

Selon l'invention, l'unité de séparation d'hydrogène fonctionne à basse ou moyenne pression par rapport aux pressions de fonctionnement communément utilisées sur ce type de procédé

Ainsi, la pression de l'unité P.S.A est avantageusement comprise entre 5 et 25 bars, de préférence de 5 à 10 bars.

Par comparaison, les unités classiques de production d'hydrogène par P.S.A. à partir de syngas produit par réformarge d'hydrocarbures suivie d'une conversion à la vapeur fonctionnent généralement entre 16 et 35 bars.

Les pressions dont il est question ici sont des pressions absolues.

La température du gaz 22 est de l'ordre de 25°C.

L'eau glacée produite dans une unité annexée à celle pour le traitement des déchets 1 peut également être utilisée pour le refroidissement du gaz 15.

L'hydrogène désiré est récupéré dans le flux 32 et le fluide à basse pression constituant le résiduaire 33 qui contient essentiellement du monoxyde et du dioxyde de carbone ainsi que de l'hydrogène résiduel, peut être recyclé dans l'unité de traitement de déchets 1.

Il peut alors servir, en partie ou en totalité, de gaz de combustion ou pour assurer le bilan thermique de l'unité éventuellement en mélange avec une portion du gaz de synthèse 15 non traitée par le procédé de l'invention.

Le gaz résiduaire, éventuellement en mélange avec une portion du gaz de synthèse non traitée par le procédé de l'invention, peut également être valorisé sous forme d'énergie ou servir d'alimentation pour une autre unité de fractionnement de gaz...

Pour réguler le débit du gaz de synthèse qui alimente le procédé de l'invention, on peut prévoir d'injecter de manière contrôlée, dans l'unité de traitement de déchets 1, une "matière de régulation", fluide ou solide, autre que des déchets, capable de se décomposer en les constituants essentiels du gaz de synthèse (H₂, CO, CO₂...) dans les conditions de température et de pression de l'unité.

Il peut s'agir en particulier d'un fluide notamment riche en hydrocarbures et on utilise préférentiellement du fuel ou du gaz naturel.

Lorsque le débit du gaz d'alimentation (syngas) produit par l'unité de traitement 1 à partir des déchets devient insuffisant pour assurer la ou les productions requises, la matière de régulation est introduite de manière contrôlée dans ladite unité de traitement afin d'augmenter par décomposition de ladite matière, le débit de syngas produit.

S'il s'agit d'un fluide tel que du fuel ou du gaz naturel, référencé en 11 sur la figure 1, celui-ci est de préférence injecté au niveau du réacteur haute température 5.

Lorsqu'il s'agît d'une matière solide, celle-ci est de préférence introduite au niveau de l'alimentation en déchets.

L'apport en oxygène est contrôlé pour assurer la gaséification complète des substances carbonées, avec une teneur en oxygène résiduel inférieure à 0,5 % et de préférence inférieure à 0,1 %.

Dans le cas de la présente invention, l'apport en matière est régulé en fonction du débit du gaz d'alimentation désiré et des déchets traités.

Il représente au moins 10 % de la puissance calorifique totale (matière de régulation et déchets) et préférentiellement plus de 15 %. La puissance calorique apportée est encore plus préférentiellement comprise entre 15 et 30 %.

Une fraction quelconque de cet apport peut être effectuée en fonctionnement établi de l'unité en utilisant les circuits de préchauffage nécessaires pendant la phase de démarrage de l'unité, en particulier lorsqu'il n'y a pas encore de gaz de synthèse produit, permettant ainsi de minimiser voire de supprimer tout investissement complémentaire lié à l'apport de la matière de régulation.

L'installation pour la mise en oeuvre du procédé selon l'invention comprend des moyens d'amenée du gaz de synthèse 15, des moyens de compression dudit gaz et des moyens de refroidissement de celui-ci. Elle comprend également une unité de séparation d'hydrogène.

Le procédé selon l'invention est économiquement avantageux, en particulier pour les traitements de faible capacité, du fait de l'absence de conversion et de la séparation de l'hydrogène à pression relativement faible.

Ce procédé présente également l'avantage de pouvoir être adapté au fonctionnement d'une unité de traitement des déchets donnée, en palliant en particulier les variations de débit du gaz d'alimentation susceptibles de se produire du fait de la qualité et de la quantité des déchets traités, par injection contrôlée d'un fluide ou d'un solide en amont, pour réguler le débit du gaz de synthèse alimentant le procédé selon l'invention.

L'invention n'est pas limitée au système décrit mais peut présenter un certain nombre de variantes qui n'en sont que des adaptations.

Ainsi par exemple, l'unité de production d'hydrogène peut être commune à plusieurs lignes d'unités de traitement de déchets fonctionnant en parallèle.

L'oxygène injecté dans ladite unité de traitement peut être essentiellement pur, en provenance d'un appareil de séparation des gaz de l'air par voie cryogénique ou de pureté de l'ordre de 90-95 % en provenance d'une unité de production d'oxygène par adsorption. Dans ce cas, le PSA pour la séparation de l'hydrogène est, si nécessaire, surdimensionné pour arrêter l'azote et l'argon introduits en plus grande quantité avec l'oxygène.

## Revendications

1. Procédé pour la production d'hydrogène à partir d'un gaz d'alimentation (15) contenant essentiellement de l'hydrogène, du monoxyde de carbone et du dioxyde de carbone, issu d'une unité (1) de traitement de déchets domestiques et/ou industriels non triés contenant des matières polluantes liquides et/ou solides, du type comprenant le compactage (2) des déchets et le dégazage des déchets compactés dans un tunnel (3) chauffé à plus de 100°C, puis la gazéification-fusion des déchets agglomérés résultants, en présence d'oxygène, dans un réacteur (5) à haute température, supérieure à 1 000°C, le refroidissement brutal du gaz de synthèse brut (7) recueilli puis l'élimination d'impuretés par lavages à l'eau et épurations successives pour fournir ledit gaz d'alimentation (15), caractérisé en ce que le gaz d'alimentation (15) est comprimé et refroidi puis le gaz résultant (22) est traité directement dans une unité de séparation d'hydrogène (30).

2. Procédé selon la revendication 1, caractérisé en ce que l'unité de séparation d'hydrogène (30) est une unité PSA.

3. Procédé selon la revendication 2, caractérisé en ce que l'unité PSA comporte de 3 à 6 adsorbeurs.

4. Procédé selon l'une quelconque des revendications précédentes, caractérisé en ce que la durée de l'étape de production dans l'unité PSA est inférieure à 180 secondes, de préférence inférieure à 120 secondes et plus préférentiellement inférieure à 90 secondes.

5. Procédé selon la revendication 1, caractérisé en ce que l'unité de séparation d'hydrogène (30) est une unité de perméation.

6. Procédé selon l'une quelconque des revendications précédentes, caractérisé en ce que la séparation de l'hydrogène dans l'unité (30) est réalisée à une pression comprise entre 5 et 25 bars, de préférence entre 5 et 10 bars.

7. Procédé selon l'une quelconque des revendications précédentes, caractérisé en ce que la température du gaz (22) traité dans l'unité de séparation d'hydrogène, est de l'ordre de 25°C.

8. Procédé selon l'une quelconque des revendications précédentes, caractérisé en ce que le gaz d'alimentation (15) contient 34 à 41 % en volume d'hydrogène, 35 à 41 % en volume de monoxyde de carbone, 23 à 41 % en volume de dioxyde de carbone et 2 à 6 % en volume d'azote.

9. Procédé selon la revendication 8, caractérisé en ce que le gaz d'alimentation (15) contient environ 35 % en volume d'hydrogène, 35 % en volume de monoxyde de carbone, 27 % en volume de dioxyde de carbone et 3 % en volume d'azote.

10. Procédé selon l'une quelconque des revendications précédentes, caractérisé en ce que le résiduaire basse pression (33) issu de l'unité de séparation d'hydrogène est recyclé au moins en partie dans l'unité de traitement des déchets (1).

11. Procédé selon l'une quelconque des revendications précédentes, caractérisé en ce que le débit du gaz d'alimentation (15) est régulé par injection régulée d'une matière de régulation (11), fluide ou solide, autre que des déchets, décomposable essentiellement en hydrogène, en monoxyde de carbone et en dioxyde de carbone, ledit apport en matière de régulation (11) représentant au moins 10 % de la puissance calorifique totale des matériaux traités dans l'unité (1).

12. Procédé selon la revendication 11, caractérisé en ce que la matière de régulation est un fluide notamment riche en hydrocarbures, de préférence du fuel ou gaz naturel injecté au niveau du réacteur haute température.

13. Procédé selon la revendication 11, caractérisé en ce que la matière de régulation (11) est solide et est introduite au niveau de l'alimentation en déchets de l'unité (1).

14. Procédé selon l'une des revendications 11 à 13, caractérisé en ce que l'apport en matière de régulation représente plus de 15 % et est plus préférentiellement compris entre 15 et 30 % de la puissance calorifique totale des matériaux traités par l'unité.
